# EUROPEAN PATENT APPLICATION

(11) **EP 1 998 313 A1**
(43) Date of publication of application: **03.12.2008**
(21) Application number: 06729526.1
(22) Date of filing: 20.03.2006
(51) Int. Cl.: G09G 5/00

(54) **INFORMATION PRESENTATION DEVICE**

(71) Applicant: Olympus Corporation, Tokyo 151-0072 (JP)
(72) Inventor: AKATSUKA, Yuichiro, c/o Olympus Prop. Services Co., Ltd., Hachioji-shi, Tokyo 192-8512 (JP); SAITO, Akito, c/o Olympus Intellectual Prop. Serv. Co., Ltd, Hachioji-shi, Tokyo 192-8512 (JP); TAKAHASHI, Kazuhiko, c/o Olympus Intellectual Prop. Serv. Co., Ltd., Hachioji-shi, Tokyo 192-8512 (JP); SHIRAI, Akira, c/o Olympus Intellectual Prop. Serv. Co., Ltd., Hachioji-shi, Tokyo 192-8512 (JP); FUKUYAMA, Naohiro, c/o Olympus Intellectual Prop. Serv. Co., Ltd., Hachioji-shi, Tokyo 192-8512 (JP); SUGITA, Takemasa, c/o Olympus Intellectual Prop. Serv. Co., Ltd., Hachioji-shi, Tokyo 192-8512 (JP); MINE, Taiji, c/o Olympus Intellectual Prop. Serv. Co., Ltd., Hachioji-shi, Tokyo 192-8512 (JP)
(74) Representative: von Hellfeld, Axel
(86) International application number: PCT/JP2006/305558
(87) International publication number: WO 2007/108093

(57) **Abstract**

An information presentation apparatus (10), which presents an image of an object and information associated with the object to an operator, is composed of a user interface section (14) including an operation section (13) to be operated by the operator or a display section (an information display section (12) and a transparent reflecting plate) which presents information to the operator, and a user interface control section (21) which detects or estimates an attitude of the operation section or the display section and switches an operation or function of the user interface section based on the detected or estimated attitude.

## Description

### Technical Field

The present invention relates to an information presentation apparatus configured to present an image of an object and information associated with the object to an operator.

### Background Art

An optical see-through information presentation apparatus, such as the one disclosed Jpn. Pat. Appln. KOKAI Publication No. 5-323229 or 5-303054, is known as a portable information presentation apparatus. The information presentation apparatus is held on a temporal region of an operator so that a half-mirror or the like is located on the line of sight of the operator. Information is presented by displaying, by means of an information display section, a predetermined image superposed on a real image of an observed image that is observed through the half-mirror.

Disclosed in US 2003/0064758 A1, moreover, is a technique used in a folding personal digital assistant (PDA) including a display section and an operation section, in which the direction of display on the display section is appropriately converted depending on the attitude, open or closed, of the PDA.

In the foregoing portable information presentation apparatus disclosed in Jpn. Pat. Appln. KOKAI Publication No. 5-323229 or 5-303054, the eye (right or left) that is used to watch the information presentation apparatus and the hand (right or left) that holds the apparatus vary according to the operator or use conditions. Thus, the user interface, that is, the orientation of the displayed image and functions of buttons, must be switched according to the use conditions of the information presentation apparatus. Conventionally, however, this switching has been troublesome because it has been achieved by means of a changeover switch operated by the operator.

For the switching of the orientation of display, there is a technique such as the one disclosed in US 2003/0064758 A1. However, this technique has nothing to do with the eye that is used to watch the display, so that the technique cannot be applied directly to the aforesaid information presentation apparatus.

### Disclosure of Invention

The present invention has been made in consideration of these points, and its object is to provide an information presentation apparatus in which a user interface can be automatically switched according to use conditions.

A form of an information presentation apparatus of the present invention is an information presentation apparatus which presents an image of an object and information associated with the object to an operator, the information presentation apparatus comprising: a user interface section including an operation section to be operated by the operator or a display section which presents information to the operator; and a user interface control section which detects or estimates an attitude of the operation section or the display section and switches an operation or function of the user interface section based on the detected or estimated attitude.

### Brief Description of Drawings

FIG. 1 is a perspective view showing an external appearance of an information presentation apparatus according to a first embodiment of the present invention;
FIG. 2 is a block diagram of the information presentation apparatus according to the first embodiment of the present invention;
FIG. 3 is a perspective view showing a state of use of the information presentation apparatus;
FIG. 4 is a diagram for illustrating a configuration of a display section;
FIG. 5 is a diagram for illustrating a right-hand hold state of the information presentation apparatus;
FIG. 6 is a diagram for illustrating a left-hand hold state of the information presentation apparatus;
FIG. 7 is a diagram showing an operational flowchart of a user interface control section;
FIG. 8 is a block diagram of an information presentation apparatus according to a second embodiment of the present invention;
FIG. 9 is a block diagram of an information presentation apparatus according to a third embodiment of the present invention; and
FIG. 10 is a perspective view showing a state of use of the information presentation apparatus according to the third embodiment.

### Best Mode for Carrying Out the Invention

The best mode for carrying out the present invention will now be described with reference to the drawings.

### [First Embodiment]

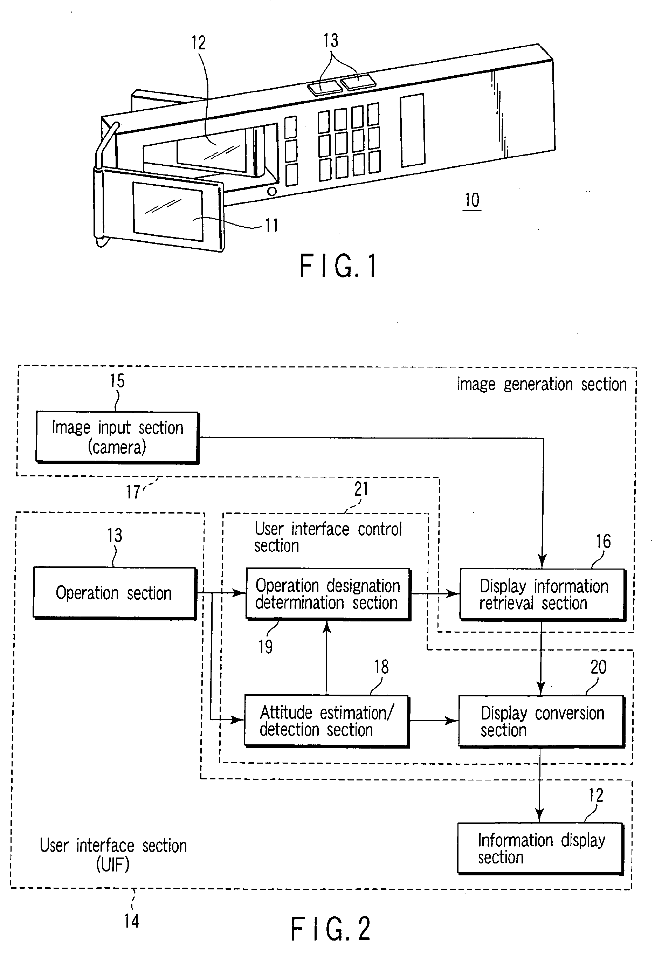

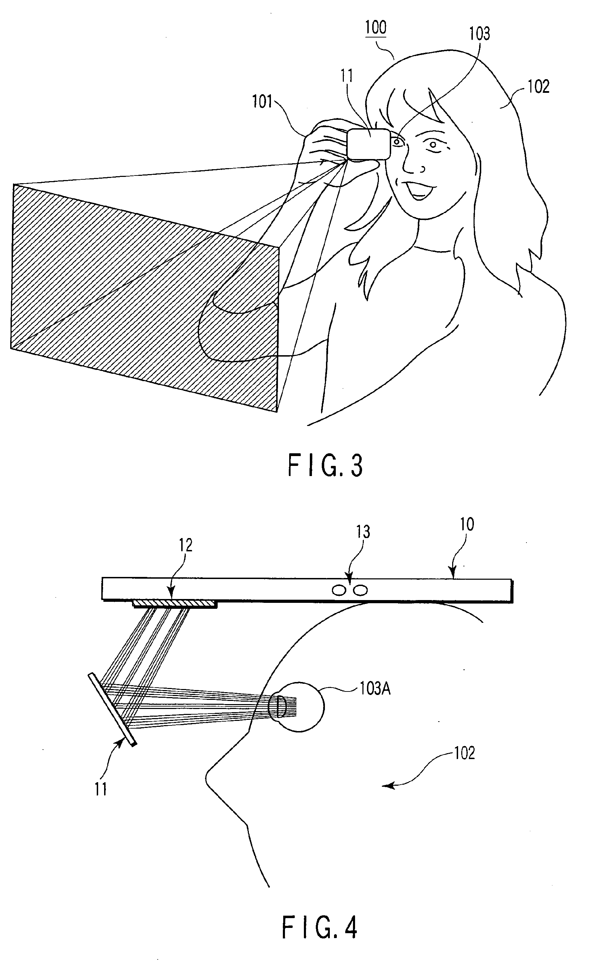

As shown in FIGS. 1 and 2, an information presentation apparatus 10 according to a first embodiment of the present invention is provided with a display section that displays predetermined images (information composed of characters, symbols, or images) indicative of predetermined information on a screen in a predetermined position in front of an operator. The display section includes a transparent reflecting plate 11 formed of a half-mirror and an information display section 12, such as a liquid crystal display. The transparent reflecting plate 11 has a transmission faculty. Thus, if an operator 100 holds the information presentation apparatus 10 with his/her right hand 101 and looks in the information presentation apparatus 10 with his/her right eye 103 and with an operator's head 102 thereon, as shown in FIG. 3, he/she can observe a real image of an observed object through the transparent reflecting plate 11. As shown in FIG. 4, moreover, a projection of the predetermined image displayed on the information display section 12 is reflected by its reflective surface toward a right eyeball 103A by a reflection function of the transparent reflecting plate 11. Accordingly, the predetermined image can be superposed on the real image of the observed object so that it can also be observed by the operator 100. Thus, the transparent reflecting plate 11 can be used as a display screen.

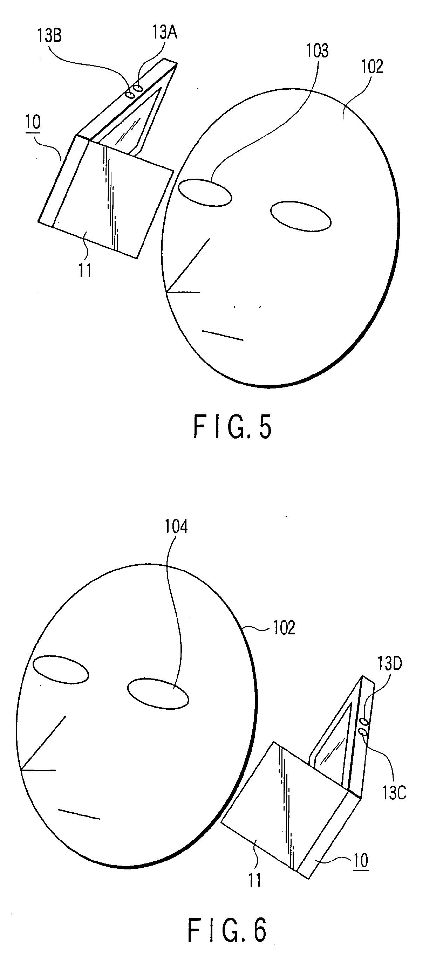

Further, the information presentation apparatus 10 is provided with an operation section 13 that includes a plurality of operation buttons with which the operator 100 performs operation. As shown in FIG. 5, the operation section 13 includes a plurality of operation buttons (e.g., button A 13A and button B 13B) that are arranged on that side surface of the information presentation apparatus 10 which faces upward when the operation section 13 is held or mounted so that the operator 100 performs observation with the right eye 103. As shown in FIG. 6, furthermore, the operation section 13 includes a plurality of operation buttons (e.g., button C 13C and button D 13D) that are arranged on that side surface of the information presentation apparatus 10 which faces upward when the operation section 13 is held or mounted so that the operator 100 performs observation with a left eye 104. Thus, the degree of freedom of the use form can be increased depending on the dominant eye and dominant arm of the operator 100 by arranging the operation buttons on both sides of the information presentation apparatus 10.

The information display section 12 (and the transparent reflecting plate 11) and the operation section 13 constitute a user interface section 14.

Further, the information presentation apparatus 10 is provided with an image input section 15 and a display information retrieval section 16. The image input section 15 includes a camera that shoots an image that contains the observed object observed through the transparent reflecting plate 11 by the operator 100. Based on the image input from the image input section 15, the display information retrieval section 16 retrieves information or an image to be superposed on the real image of the observed object as it is displayed on the information display section 12. Thus, the image input section 15 and the display information retrieval section 16 constitute an image generation section 17 that generates information or an image associated with the input image, as the predetermined image to be displayed on the display section.

For the form of holding or mounting the information presentation apparatus 10, moreover, the vertical attitude of the information presentation apparatus 10 is vertically inverted depending on whether the operator 100 holds or mounts the information presentation apparatus 10 for the observation with the right eye 103, as shown in FIG. 5, or whether the operator 100 holds or mounts the apparatus for the observation with the left eye 104, as shown in FIG. 6, although the substantial relative positions of the display section and the operation section 13 are fixed. Therefore, the image displayed on the information display section 12 must be reoriented depending on the held or mounted state.

In some cases, moreover, icons that represent scrolls of an image to, for example, the left- and right-hand sides with respect to the operator 100 may be displayed so that the operator 100 can perform operations for the image scrolls accordingly. When the information presentation apparatus 10 is held on the right side of the operator's head 102, as shown in FIG. 5, the operator 100 holds the information presentation apparatus 10 with his/her right hand. In this case, it is intuitively easier to operate a button for designating the right-hand scroll with the middle finger, among the digits from the thumb to the little finger of the right hand, than with the ring finger. Likewise, it is natural to operate a button for designating the left-hand scroll with the ring finger. It is desirable, therefore, to allocate button A 13A and button B 13B as the button of the operation section 13 for designating the right-hand scroll and the button of the operation section 13 for designating the left-hand scroll, respectively.

Thus, the allocation of the buttons of the operation section 13 must also be changed depending on the form of holding or mounting the information presentation apparatus 10.

In order to change the direction of display and the allocation of the operation buttons depending on the form of holding or mounting the information presentation apparatus 10, therefore, the information presentation apparatus 10 according to the present embodiment is provided with an attitude estimation/detection section 18, an operation designation determination section 19, and a display conversion section 20. The attitude estimation/detection section 18 estimates or detects the attitude of the user interface section 14, that is, the relatively upward or downward direction of the user interface section 14. Based on the result of the estimation or detection by the attitude estimation/detection section 18, the operation designation determination section 19 switches the function allocated to the operation section 13. Based on the result of the estimation or detection by the attitude estimation/detection section 18, the display conversion section 20 converts the image displayed on the information display section 12. The attitude estimation/detection section 18, operation designation determination section 19, and display conversion section 20 constitute a user interface control section 21.

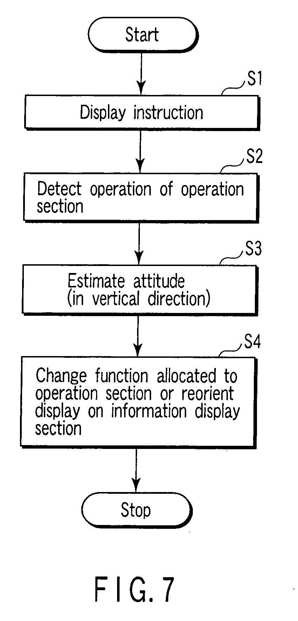

The operation of the user interface control section 21 will be described with reference to the flowchart of FIG. 7. First, an indication to prompt the operation of the operation section 13 on the relative upper or lower side, e.g., "OPERATE UPPER OPERATION UNIT", is displayed on the information display section 12 (Step S1). This indication is displayed both upward and downward so that the operator 100 can perceive it without regard to the held or mounted state of the information presentation apparatus 10, whether the one shown in FIG. 5 or the one shown in FIG. 6. Further, the attitude estimation/detection section 18 detects the operation by the operator 100 corresponding to the display to prompt the operation of the operation section 13 (Step S2) and estimates the attitude (in the vertical direction) of the user interface section 14 based on the result of the detection (Step S3). Thus, if button A 13A or button B 13B of the operation section 13 is operated, it is estimated that the held or mounted state is the one shown in FIG. 5 and the side on which button A 13A and button B 13B are arranged is upward. If button C 13C or button D 13D of the operation section 13 is operated, on the other hand, it is estimated that the held or mounted state is the one shown in FIG. 6 and the side on which button C 13C and button D 13D are arranged is upward.

Based on this estimation, the operation designation determination section 19 changes the function allocation to the operation section 13, and the display conversion section 20 reorients the display on the information display section 12 (Step S4). In the present embodiment, the information presentation apparatus 10 is set so that the held or mounted state shown in FIG. 5 is default. Actually, therefore, the operation of Step S4 is not performed at all if it is estimated that the side on which button A 13A and button B 13B are arranged is upward, as shown in FIG. 5. Thus, the operation of Step S4 is performed only if it is estimated that the side on which button C 13C and button D 13D are arranged is upward, as shown in FIG. 6. In this case, the operation designation determination section 19 allocates, for example, the function to designate the right-hand scroll of the displayed image to button C 13C, the function to designate the left-hand scroll to button D 13D, and other functions to button A 13A and button B 13B. If any of the buttons of the operation section 13 is then operated, a content of operation designation conformable to the allocated function is given to the display information retrieval section 16 of the image generation section 17, and an image is generated by, for example, new retrieval. Further, the display conversion section 20 reorients the image generated by the display information retrieval section 16 and causes this image to be displayed on the information display section 12.

In the image generation section 17, moreover, no information or image associated with the input image to be superposed on the real image of the observed object is generated until the top/bottom location can be determined by the user interface control section 21. After the top/bottom location is determined, the vertical orientation of the information or image generated in the image generation section 17 is converted in the display conversion section 20 and displayed on the information display section 12.

It is to be understood, in actually working the information presentation apparatus 10, that it is necessary to execute operation and processing for sight line calibration (detailed description of which is omitted) before starting observation of the actual observed object, as well as to switch the user interface section 14 based on the top/bottom location determination. In this operation and processing, an image of a predetermined object of calibration is observed, and the information or image generated in the image generation section 17 is displayed in a predetermined position so as to be superposed on the real image.

According to the first embodiment of the present invention, as described above, the attitude of the user interface section 14 is estimated based on the operation performed by the operator 100 after the indication to prompt the operation of the operation section 13 on the relative upper or lower side is displayed on the information display section 12. Thus, there may be provided the information presentation apparatus 10 in which the user interface section 14 can be automatically switched according to the use conditions.

### [Second Embodiment]

In the first embodiment described above, the attitude estimation/detection section 18 estimates the attitude of the user interface section 14 based on the operation performed by the operator 100 after the indication to prompt the operation of the operation section 13 on the relative upper or lower side is displayed on the information display section 12.

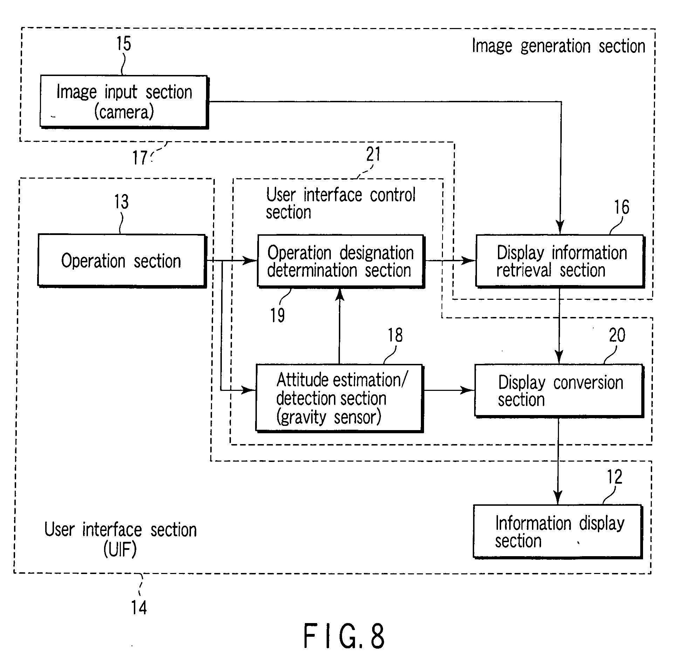

In an information presentation apparatus 10 according to a second embodiment of the present invention, as shown in FIG. 8, on the other hand, an attitude estimation/detection section 18 is configured to include a gravity sensor for detecting the gravity direction. Accordingly, the attitude of a user interface section 14 can be estimated by the attitude estimation/detection section 18 alone without requiring the operation by the operator 100 that is required according to the first embodiment.

Thus, according to the second embodiment of the present invention, the attitude of the user interface section 14 can be easily estimated by the use of the gravity sensor. Accordingly, there may be provided the information presentation apparatus 10 in which the user interface section 14 can be automatically switched according to the use conditions.

### [Third Embodiment]

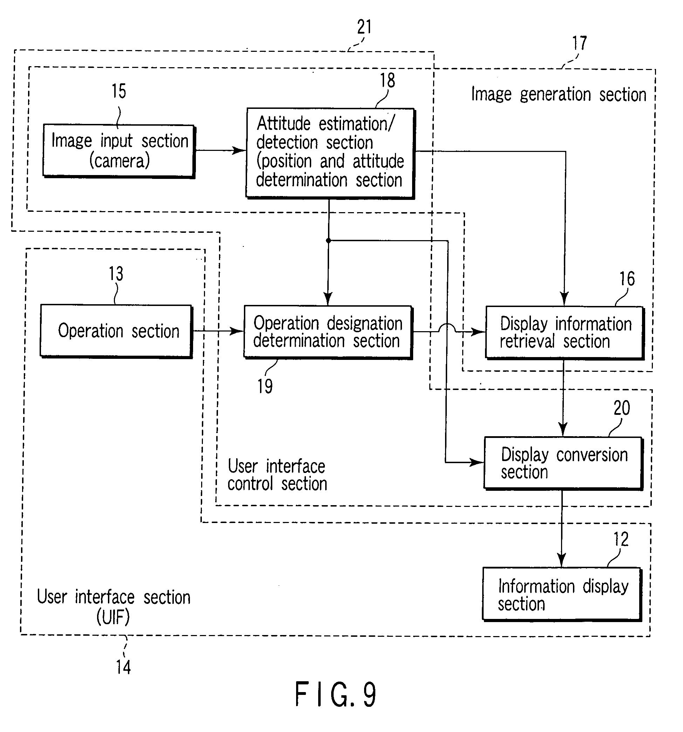

In an information presentation apparatus 10 according to a third embodiment of the present invention, as shown in FIG. 9, an image generation section 17 includes an attitude estimation/detection section 18 in addition to an image input section 15 and an display information retrieval section 16. Further, a user interface control section 21 includes the image input section 15 in addition to the attitude estimation/detection section 18, an operation designation determination section 19, and a display conversion section 20. Thus, the image input section 15 and the attitude estimation/detection section 18 are utilized as a part of the user interface control section 21 as well as a part of the image generation section 17. In the present embodiment, moreover, the attitude estimation/detection section 18 is configured to include a position and attitude determination section.

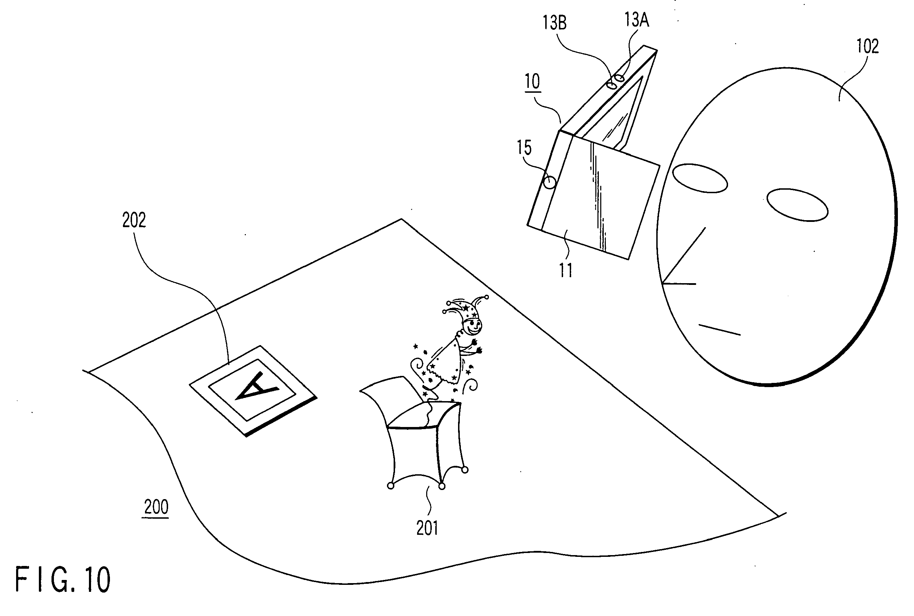

Thus, in the present embodiment, as shown in FIG. 10, a reference surface determination marker 202, along with an object 201, is disposed on a reference surface such as a desk surface 200. The position and attitude determination section of the attitude estimation/detection section 18 determines the vertical direction of a user interface section 14 based on the way the reference surface determination marker 202 appears. Specifically, the position and attitude determination section estimates the attitude of the image input section (camera) 15 during operation for shooting the reference surface determination marker 202, whose position and attitude in an absolute coordinate system in the real world and optical characteristics are known, by utilizing an image of the reference surface determination marker 202 shot by the image input section (camera) 15. This estimation can be easily realized by using a method that is described in, for example, "High-Precision Real-Time Estimating Method of Position/Attitude of Rectangular Marker for VR Interface by Monocular Vision" (3D Image Conference '96 Proceedings pp. 167-172 by Akira Takahashi, Ikuo Ishii, Hideo Makino, and Makoto Nakashizuka, 1996) and in which the position and attitude of image input means are obtained from a reference mark position. Therefore, a detailed description of the estimation is omitted herein.

Further, the display information retrieval section 16 of the image generation section 17 retrieves display information by using the output of the attitude estimation/detection section 18. Specifically, it retrieves information or an image associated with the reference surface determination marker 202 shot in the aforesaid manner.

In the present embodiment, furthermore, the display conversion section 20 of the user interface control section 21 not only converts the vertical orientation in the same manner as in the first and second embodiments, but also changes the position and attitude of the associated information or image retrieved by the display information retrieval section, based on the position and attitude of the user interface section 14 estimated by the attitude estimation/detection section 18 including the position and attitude determination section, and causes the information display section 12 to display them. By doing this, the operator 100 can be caused to observe the associated information or image in a position and attitude corresponding to the position and attitude of the object 201. A method for displaying information associated with the shot reference surface determination marker 202 in a superposed manner can be easily realized by using a method in which the associated information is displayed according to the point of view of, for example, image input means disclosed in U.S. Pat. No. 6,577,249. Therefore, a detailed description of the method is omitted.

It is to be understood that no information is presented in a superposed manner until the reference surface determination marker 202 is recognized as a sequence for the use of the information presentation apparatus 10 according to the present embodiment.

According to this third embodiment, as described above, there may be provided the information presentation apparatus 10 in which the attitude of the user interface section 14 can be easily estimated and the user interface section 14 can be automatically switched according to the use conditions. Further, the image to be superposed for display can be presented by the position and attitude corresponding to the position and attitude of the user interface section 14, as well as by its vertical orientation.

Although the present invention has been described based on the embodiments, it is to be understood that the invention is not limited to the embodiments described above and that various changes and modifications may be effected therein without departing from the spirit of the invention.

Although the information presentation apparatus 10 has been described as being configured to be held one-handed, for example, it may be configured to be held or mounted on the operator's head 102 not by hand but with some retainer such that only the operation section 13 is operated by hand. Unless the relative positions and attitudes of the display section and the operation section 13 are substantially changed, a part including the operation section 13 may be formed independently of the display section. In this case, for example, the display section is held or mounted on the operator's head 102, while the part including the operation section 13 is attached to a lateral portion of the waist region of the operator 100, a belt, etc.

### (Subjunction)

An invention with the following configuration can be derived from the specific embodiments described above.
(1) An information presentation apparatus which presents an image of an object and information associated with the object to an operator, the information presentation apparatus comprising:
   a user interface section including an operation section to be operated by the operator or a display section which presents information to the operator; and
   a user interface control section which detects or estimates an attitude of the operation section or the display section and switches an operation or function of the user interface section based on the detected or estimated attitude.

### (Corresponding embodiments)

The first to third embodiments correspond to embodiments associated with the information presentation apparatus described in (1).

### (Operation and effect)

In the information presentation apparatus described in (1), the operation of the user interface section is switched based on a detected or estimated vertical direction.

According to the information presentation apparatus described in (1), therefore, the user interface section can be automatically switched according to the use conditions.
(2) An information presentation apparatus described in (1), characterized in that the display section displays to the operator a superposition of a real image of the object and a predetermined image indicative of predetermined information.

### (Corresponding embodiments)

The first to third embodiments correspond to embodiments associated with the information presentation apparatus described in (2).

### (Operation and effect)

In the information presentation apparatus described in (2), the display section presents to the operator a superposition of the real image of the object and a generated image. According to the information presentation apparatus described in (2), therefore, the operator can be caused to observe the real image of the observed object and the image.
(3) An information presentation apparatus described in (2), characterized by further comprising an image generation section for generating information or an image associated with an image input as the predetermined image.

### (Corresponding embodiments)

The first to third embodiments correspond to embodiments associated with the information presentation apparatus described in (3).

### (Operation and effect)

The information presentation apparatus described in (3) further includes the image generation section for generating the information or image associated with the input image. According to the information presentation apparatus described in (3), therefore, the information or image associated with the input image can be presented combinedly.
(4) An information presentation apparatus described in (1), characterized in that the information presentation apparatus is mounted or held on the operator in a plurality of forms (ways of mounting or holding).

### (Corresponding embodiments)

The first to third embodiments correspond to embodiments associated with the information presentation apparatus described in (4).

The information presentation apparatus described in (4) has the plurality of forms for mounting or holding (ways of mounting or holding).

According to the information presentation apparatus described in (4), therefore, the apparatus can be held or mounted in the plurality of ways.
(5) An information presentation apparatus described in (4), characterized in that substantial relative positions of the display section and the operation section are fixed with respect to the plurality of forms.

### (Corresponding Embodiments)

The first to third embodiments correspond to embodiments associated with the information presentation apparatus described in (5).

### (Operation and effect)

In the information presentation apparatus described in (5), the "relative positions and attitudes" of the display section and the operation section are fixed in any of a plurality of forms of mounting or holding. According to the information presentation apparatus described in (5), therefore, the operator can select the form of mounting or holding without hesitation, and the processing of the apparatus itself need not substantially changed depending on the form of holding or mounting.
(6) An information presentation apparatus described in (4), characterized in that the orientation of the image displayed on the display section varies according to the plurality of forms.

### (Corresponding embodiments)

The first to third embodiments correspond to embodiments associated with the information presentation apparatus described in (6).

### (Operation and Effect)

In the information presentation apparatus described in (6), the orientation of the image displayed on the display section varies according to the plurality of forms. According to the information presentation apparatus described in (6), therefore, the image can always be presented to the operator with a correct orientation without regard to the plurality of forms of mounting or holding.
(7) An information presentation apparatus described in (4), characterized in that the display section is mounted or held at the side of the operator.

### (Corresponding embodiments)

The first to third embodiments correspond to embodiments associated with the information presentation apparatus described in (7).

### (Operation and effect)

In the information presentation apparatus described in (7), the operation section is mounted or held at the side of the operator.

According to the information presentation apparatus described in (7), therefore, a part including the operation section can be formed independently, so that the use form is diverse.
(8) An information presentation apparatus described in (1), characterized in that the user interface control section includes an attitude estimation/detection section which estimates or detects the attitude of the user interface section, an operation designation determination section which switches a function allocated to the operation section based on a result of the estimation or detection by the attitude estimation/detection section, and a display conversion section which converts the image displayed on the display section based on the result of the estimation or detection by the attitude estimation/detection section.

### (Corresponding embodiments)

The first to third embodiments correspond to embodiments associated with the information presentation apparatus described in (8).

### (Operation and effect)

The information presentation apparatus described in (8) estimates or detects the attitude of the user interface section, and based on the result of the estimation or detection, switches the function allocated to the operation section and converts the image displayed on the display section.

According to the information presentation apparatus described in (8), therefore, the operation section or the display section can be automatically switched according to the attitude of the user interface section.
(9) An information presentation apparatus described in (8), characterized in that the attitude estimation/detection section detects a relatively upward or downward direction of the user interface section.

### (Corresponding embodiments)

The first and second embodiments correspond to embodiments associated with the information presentation apparatus described in (9).

### (Operation and effect)

In the information presentation apparatus described in (9), the relatively upward or downward direction of the user interface section is detected.

According to the information presentation apparatus described in (9), therefore, the operation section or the display section can be automatically switched according to the relatively upward or downward direction of the user interface section.
(10) An information presentation apparatus described in (8), characterized in that the attitude estimation/detection section includes a gravity sensor for detecting a gravity direction.

### (Corresponding embodiment)

The second embodiment corresponds to an embodiment associated with the information presentation apparatus described in (10).

### (Operation and effect)

In the information presentation apparatus described in (10), the attitude of the user interface section is estimated or detected by detecting the gravity direction by means of the gravity sensor.

According to the information presentation apparatus described in (10), therefore, the attitude of the user interface section can be easily estimated or detected without bothering the operator.
(11) An information presentation apparatus described in (8), characterized in that the attitude estimation/detection section estimates the attitude of the user interface section based on operation performed by the operator after an indication to prompt operation of the operation section on the relative upper or lower side is displayed on the display section.

### (Corresponding embodiment)

The first embodiment corresponds to an embodiment associated with the information presentation apparatus described in (11).

### (Operation and effect)

In the information presentation apparatus described in (11), the attitude of the user interface section is estimated or detected based on the operation performed after the indication to require the operation of the upward or downward operation section.

According to the information presentation apparatus described in (11), therefore, the attitude of the user interface section can be estimated or detected without providing any special detection mechanism.
(12) An information presentation apparatus described in (8), characterized in that the attitude estimation/detection section includes a position and attitude determination section which estimates an attitude of a camera during operation for shooting a marker, whose position and attitude in an absolute coordinate system in the real world and optical characteristics are known, by utilizing an image of the marker shot by the camera.

### (Corresponding embodiment)

The third embodiment corresponds to an embodiment associated with the information presentation apparatus described in (12).

### (Operation and effect)

In the information presentation apparatus described in (12), the attitude of the user interface section can be estimated or detected based on the marker image.

According to the information presentation apparatus described in (12), therefore, the position and attitude of the user interface section, including an inclination, orientation, etc., as well as a simple vertical direction thereof, can be estimated or detected.
(13) An information presentation apparatus described in (12), characterized in that an output of the position and attitude determination section is utilized in generating the image displayed on the display section.

### (Corresponding embodiment)

The third embodiment corresponds to an embodiment associated with the information presentation apparatus described in (13).

### (Operation and effect)

In the information presentation apparatus described in (13), the displayed image can be generated by utilizing the estimated or detected position and attitude.

According to the information presentation apparatus described in (13), therefore, the image can be presented in the position and attitude based on the estimated or detected position and attitude.
(14) An information presentation apparatus described in (8), characterized in that the display conversion section switches operation of the display section based on an output of the attitude estimation/detection section.

### (Corresponding embodiments)

The first to third embodiments correspond to embodiments associated with the information presentation apparatus described in (14).

### (Operation and effect)

In the information presentation apparatus described in (14), the display conversion section switches the operation of the display section based on the output of the attitude estimation/detection section.

According to the information presentation apparatus described in (14), therefore, the operation of the display section can be switched according to the estimated or detected position and attitude.
(15) An information presentation apparatus described in (14), characterized in that the operation of the display section switched by the display conversion section is the orientation of the image displayed on the display section.

### (Corresponding embodiments)

The first to third embodiments correspond to embodiments associated with the information presentation apparatus described in (15).

### (Operation and effect)

In the information presentation apparatus described in (15), the orientation of the image displayed on the display section is switched according to the estimated or detected position and attitude.

According to the information presentation apparatus described in (15), therefore, the image can be presented with a correct orientation without regard to the attitude of the display section.
(16) An information presentation apparatus described in (8), characterized in that the operation designation determination section switches a function allocated to the operation section based on an output of the attitude estimation/detection section.

### (Corresponding embodiments)

The first to third embodiments correspond to embodiments associated with the information presentation apparatus described in (16).

### (Operation and effect)

In the information presentation apparatus described in (16), the function allocated to the operation section is switched according to the estimated or detected position and attitude.

According to the information presentation apparatus described in (16), therefore, there may be provided the operation section that can be easily operated without regard to the attitude of the operation section.

## Claims

1. An information presentation apparatus (10) which presents an image of an object and information associated with the object to an operator, the information presentation apparatus **characterized by** comprising:
a user interface section (14) including an operation section (13) to be operated by the operator or a display section which presents information to the operator; and
a user interface control section (21) which detects or estimates an attitude of the operation section (13) or the display section and switches an operation or function of the user interface section (14) based on the detected or estimated attitude.

2. An information presentation apparatus according to claim 1, **characterized in that** the display section displays to the operator a superposition of a real image of the object and a predetermined image indicative of predetermined information.

3. An information presentation apparatus according to claim 2, **characterized by** further comprising an image generation section (17) for generating information or an image associated with an image input as the predetermined image.

4. An information presentation apparatus according to claim 1, **characterized in that** the information presentation apparatus is mounted or held on the operator in a plurality of forms.

5. An information presentation apparatus according to claim 4, **characterized in that** substantial relative positions of the display section and the operation section (13) are fixed with respect to the plurality of forms.

6. An information presentation apparatus according to claim 4, **characterized in that** the orientation of the image displayed on the display section varies according to the plurality of forms.

7. An information presentation apparatus according to claim 4, **characterized in that** the display section is mounted or held at the side of the operator.

8. An information presentation apparatus according to claim 1, **characterized in that** the user interface control section (21) includes an attitude estimation/detection section (18) which estimates or detects the attitude of the user interface section (14), an operation designation determination section (19) which switches a function allocated to the operation section (13) based on a result of the estimation or detection by the attitude estimation/detection section (18), and a display conversion section (20) which converts the image displayed on the display section based on the result of the estimation or detection by the attitude estimation/detection section (18).

9. An information presentation apparatus according to claim 8, **characterized in that** the attitude estimation/detection section (18) detects a relatively upward or downward direction of the user interface section (14).

10. An information presentation apparatus according to claim 8, **characterized in that** the attitude estimation/detection section (18) includes a gravity sensor for detecting a gravity direction.

11. An information presentation apparatus according to claim 8, **characterized in that** the attitude estimation/detection section (18) estimates the attitude of the user interface section (14) based on operation performed by the operator after an indication to prompt operation of the operation section (13) on the relative upper or lower side is displayed on the display section.

12. An information presentation apparatus according to claim 8, **characterized in that** the attitude estimation/detection section (18) includes a position and attitude determination section (18) which estimates an attitude of a camera (15) during operation for shooting a marker (202), whose position and attitude in an absolute coordinate system in the real world and optical characteristics are known, by utilizing an image of the marker shot by the camera.

13. An information presentation apparatus according to claim 12, **characterized in that** an output of the position and attitude determination section (18) is utilized in generating the image displayed on the display section.

14. An information presentation apparatus according to claim 8, **characterized in that** the display conversion section (20) switches operation of the display section based on an output of the attitude estimation/detection section (18).

15. An information presentation apparatus according to claim 14, **characterized in that** the operation of the display section switched by the display conversion section (20) is the orientation of the image displayed on the display section.

16. An information presentation apparatus according to claim 8, **characterized in that** the operation designation determination section (19) switches a function allocated to the operation section (13) based on an output of the attitude estimation/detection section (18).
